# EUROPEAN PATENT SPECIFICATION

(11) **EP 2 528 726 B1**
(45) Date of publication and mention of the grant of the patent: **06.12.2017**
(21) Application number: 11705965.9
(22) Date of filing: 11.01.2011
(51) Int. Cl.: B29C 70/54, B26D 1/22, B26D 3/10, B29B 11/16, B29L 31/00, B26D 1/00, B26D 1/40

(54) **IMPROVEMENTS RELATING TO COMPOSITE MANUFACTURING TECHNIQUES**
VERBESSERUNGEN IN ZUSAMMENHANG MIT VERFAHREN ZUR HERSTELLUNG VON VERBUNDSTOFFEN
AMELIORATION APPORTEES A DES TECHNIQUES DE PRODUCTION COMPOSITES MANUFACTURING

(30) Priority: 30.07.2010 GB 201012869; 15.03.2010 US 313912 P; 15.03.2010 US 313909 P; 28.01.2010 US 298927 P
(43) Date of publication of application: 05.12.2012
(73) Proprietor: Vestas Wind Systems A/S, 8200 Aarhus N (DK)
(72) Inventor: HOLLOWAY, Gary, Newport PO30 5WZ (GB); HEDGES, Andrew, Newport PO30 5WZ (GB); HANCOCK, Mark, Newport PO30 5WZ (GB)
(74) Representative: Kent, Peter Joseph
(86) International application number: PCT/GB2011/050035
(87) International publication number: WO 2011/092486

(56) References cited:
- GB-A- 1 262 207
- GB-A- 2 217 649
- GB-A- 2 378 995
- US-A- 5 820 804

## Description

Automatic fibre placement machines are known as making the manufacturing of composite material products more efficient. They involve moving a placement head past a mould and depositing fibres on the mould, see e.g. US6692681B1, US2007044896A1 or WO2005105641A2, which fibres can be provided in tows, plies, tapes or any other kind of fibre bundle lengths, here commonly referred to as strips. Stress concentrations in carbon fibre and glass fibre tow/ply/tape drop-offs can lead to delamination. This severely reduces the strength of a laminate and could lead to catastrophic failure. Traditional means to minimise these drop-off stresses include minimising the tow or ply thickness to both reduce the abrupt section change and the area of resin rich pockets. Reducing thicknesses of tows or plies, however, also reduces the deposition rate of the material which leads to high component costs.

Document US5820804A discloses a method and an apparatus for tapering an edge of a fibrous reinforcement sheet, according to the preamble of claims 1 and 8.

In accordance with the present invention, there is provided a method of tapering an edge of a fibrous reinforcement sheet or strip for a composite structure, the method comprising compacting an edge region of the sheet or strip to define a taper in cross-section, the edge region having been shaped before compaction to define a series of projections alternating with recesses in plan view, wherein the projections, in plan view, spread when compacted to narrow the recesses between the projections.
The inventive concept encompasses a method of making a composite structure, comprising: tapering an edge of a fibrous sheet or strip in accordance with the above method; and incorporating the sheet or strip into a composite structure with the tapered edge lying against or beside at least one other fibrous reinforcement sheet or strip.
The present invention also provides an apparatus for tapering an edge of a fibrous reinforcement sheet or strip for a composite structure, the apparatus comprising: a support for supporting the sheet or strip; and a compaction device for compacting an edge region of the sheet or strip to define a taper in cross-section, wherein the compaction device comprises a roller and an anvil arranged to squeeze the edge region between them; and a shaping device arranged to shape the edge region of the sheet or strip, before compaction, to define a series of recesses alternating with projections in plan view.

The inventive concept also encompasses a composite structure such as a wind turbine blade produced by the above methods or apparatus.
Optional features of the present invention are set out in the sub claims appended hereto.

As described further below, the problem described above is solved by shaping tow/ply/tape drop offs which, together with on-part compaction and consolidation, allows much thicker material to be used. In certain embodiments of the invention, shaped cutters form part of the surface of a roller device. The cutter roller may operate with a paired under roller. When a cut is required, both rollers accelerate to match the speed of the tow/ply/tape and move together to clamp and cut the tow. The compaction or forming method consists of two mechanisms; one for the stationary material, and one for the material being deposited. The stationary forming method operates on the stationary material and stamps the desired end condition via an anvil and a former die. The moving forming method operates on the material being deposited and uses an offset cam roller former together with a supporting roller former device. During operation both rollers accelerate to match the speed of the tow/ply/tape. For both methods one or both of the formers can move together to form the material.

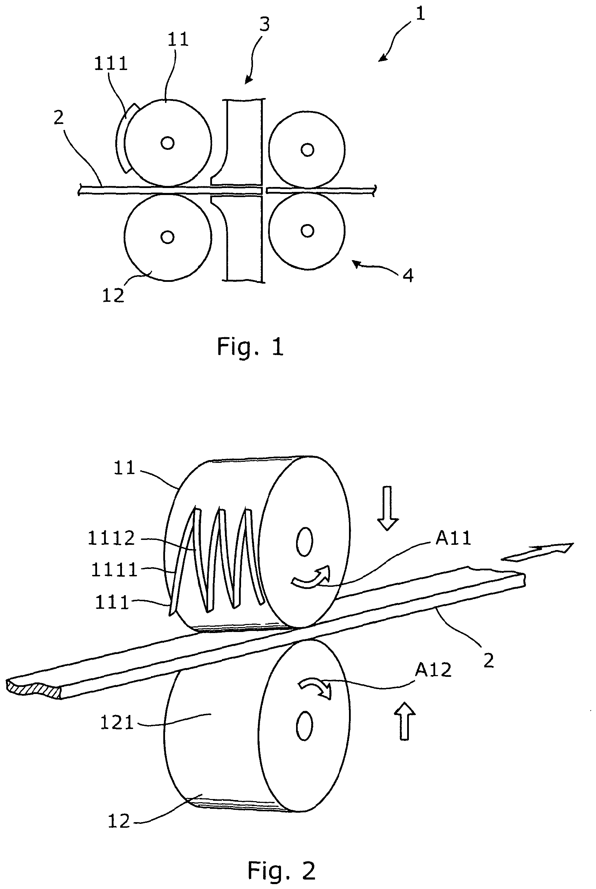

Fig. 1 shows a side view of a cutting device 1 in an automatic fibre placement machine. A fibre tow 2 is fed through the cutting device, which comprises a cutting part 11 and a support part 12, shown in a perspective view in fig. 2. Although reference is here made to a fibre tow, the invention is applicable to any kind of fibre strips, whether they are fibre tows, fibre tape, UD ply, biax ply, triax ply, or any other length of fibres for composite material manufacturing. Also, the invention is applicable to such fibre strips regardless whether they are dry or impregnated with resin.

When the tow 2 is to be cut, the cutting part 11, provided with a cutting edge 111, and the support part 12, provided with a support surface 121, are brought to rotate in opposite directions as indicated in fig. 2 with the arrows A11 and A12, and the cutting part 11 and the support part 12 are moved from opposite sides of the tow 2, towards the tow 2, so that the cutting edge 111 and the support surface 121 moves due to their rotation along with the tow 2. Alternatively, one of the cutting part 11 and the support part 12 can be rotated but not translated. The cutting part 11 and the support part 12 are forced towards each other with the tow 2 between them, so that the tow 2 is cut by the cutting edge 111.

The cutting edge extends in a direction parallel to the axis of rotation of the cutting part 11, in a zigzag manner. Thus, during the cutting operation, the cutting edge 111 extends across the tow 2 and is oriented, at a first section 1111 of the lateral extension of the tow, in a first non-zero angle to the direction perpendicular to the tow feeding direction, and, at a second section 1112 of the lateral extension of the tow, in a second non-zero angle to the direction perpendicular to the tow feeding direction.

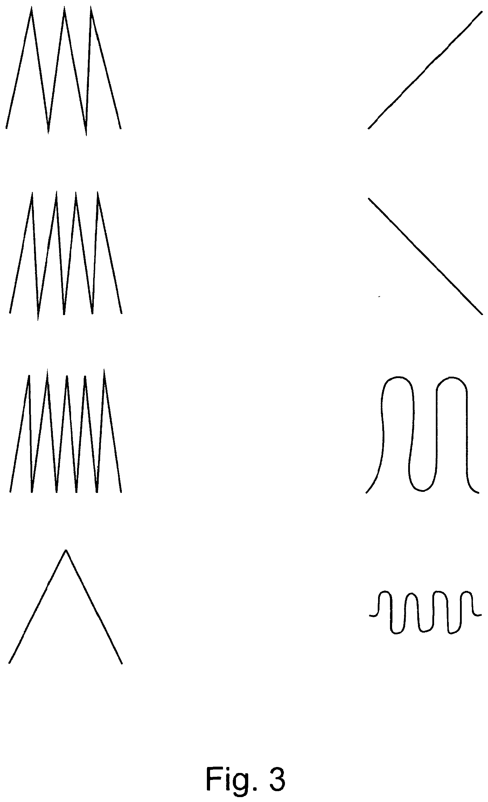

Fig. 3 shows different alternatives for the shape of the cutting edge 111.

Reference is made to fig. 1. The cutting device 1 comprises a first and a second tow end compaction device 3, 4. As can be seen in the side view in fig. 4, the first tow end compaction device 3 comprises a first and a second tow end compaction part 31, 32. In fig. 4 the second tow end compaction part 32 is shown sectioned vertically and parallel to the tow path. Fig. 5 shows the first and second tow end compaction parts 31, 32 in a view along the tow path. The first and second tow end compaction parts 31, 32 are arranged to move, upon cutting the tow, towards each other from opposite sides of the tow 2, towards the tow. Alternatively, one of the first and second tow end compaction parts 31, 32 can be stationary.

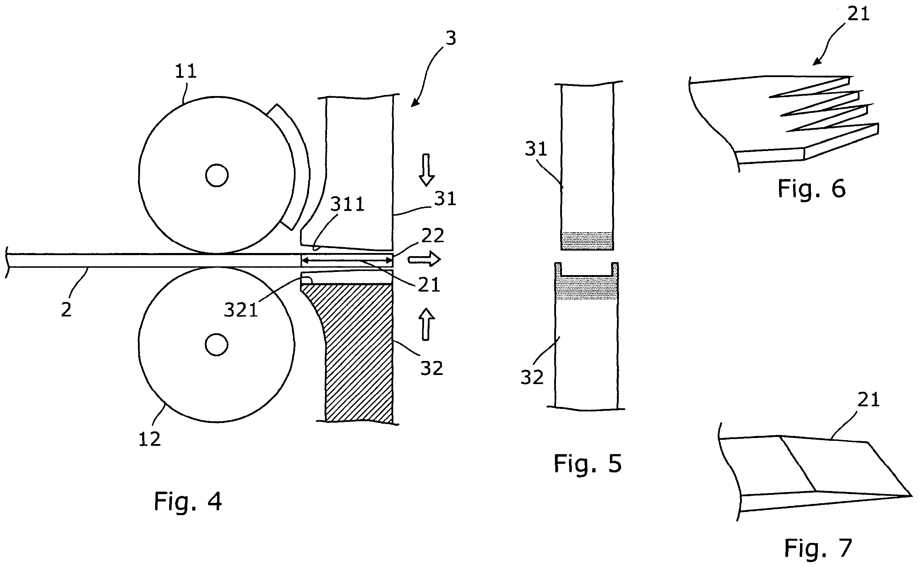

The first and second tow end compaction parts 31, 32 have tow contact surfaces 311, 321. A first tow termination section, indicated in fig. 4 with a double arrow 21, is here defined as a section extending from a first tow end 22 and a certain distance along the tow 2. The tow contact surfaces 311, 321 are oriented so that, when in contact with the first tow termination section 21, the tow 2 is given a wedge shape with an increasing thickness in the direction away from the first tow end 22.

Fig. 6 shows a perspective view of the first tow termination section 21 after the cut by the cutting part 11 and the support part 12, and fig. 7 shows a perspective view of the first tow termination section 21 after contact with the first and second tow end compaction parts 31, 32.

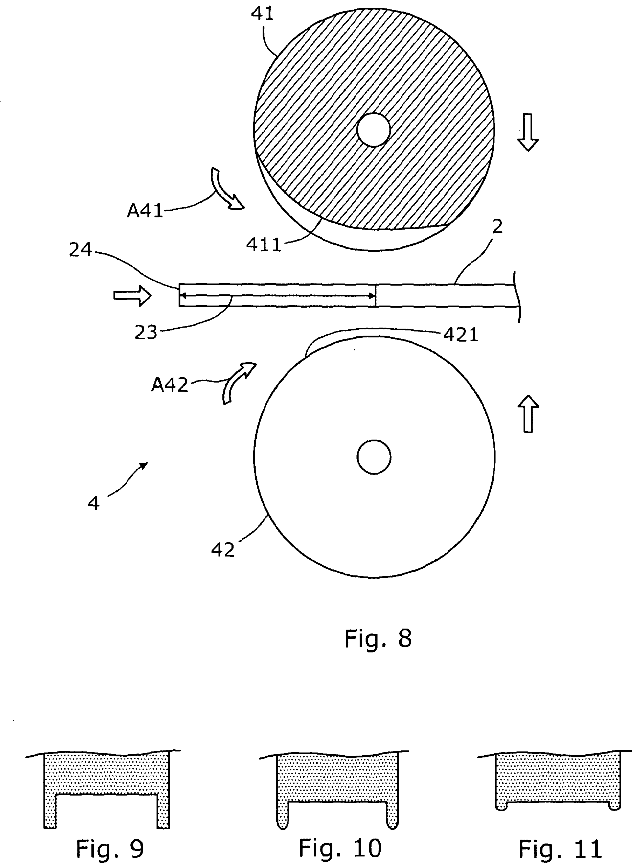

As can be seen in the side view in fig. 8, the second tow end compaction device 4 comprises a first and a second tow end compaction part 41, 42, which are substantially disc shaped. In fig. 8 the first tow end compaction part 41 is shown sectioned vertically and parallel to the tow path. Fig. 9-11 each show a portion of the first tow end compaction part 41 in respective views that are sectioned in a radial direction and perpendicular to the tow path.

The first and second tow end compaction parts 41, 42 are arranged to rotate in opposite directions as indicated in fig. 8 with the arrows A41 and A42. Further, the first and second tow end compaction parts 41, 42 have tow contact surfaces 411, 421. A second tow termination section, indicated in fig. 8 with a double arrow 23, is here defined as a section extending from a second tow end 24 and a certain distance along the tow 2. The first and second tow end compaction parts 41, 42 are arranged to move, while rotating, from opposite sides of the tow 2, towards the tow, so that the tow contact surfaces 411, 421 move due to their rotation along with the tow 2. Thereby, the tow contact surfaces 311, 321 contact the second tow termination section 23 so that the tow is given a wedge shape with an increasing thickness in the direction away from the second tow end 24. Alternatively, one of the first and second tow end compaction parts 41, 42 can be rotated but not translated.

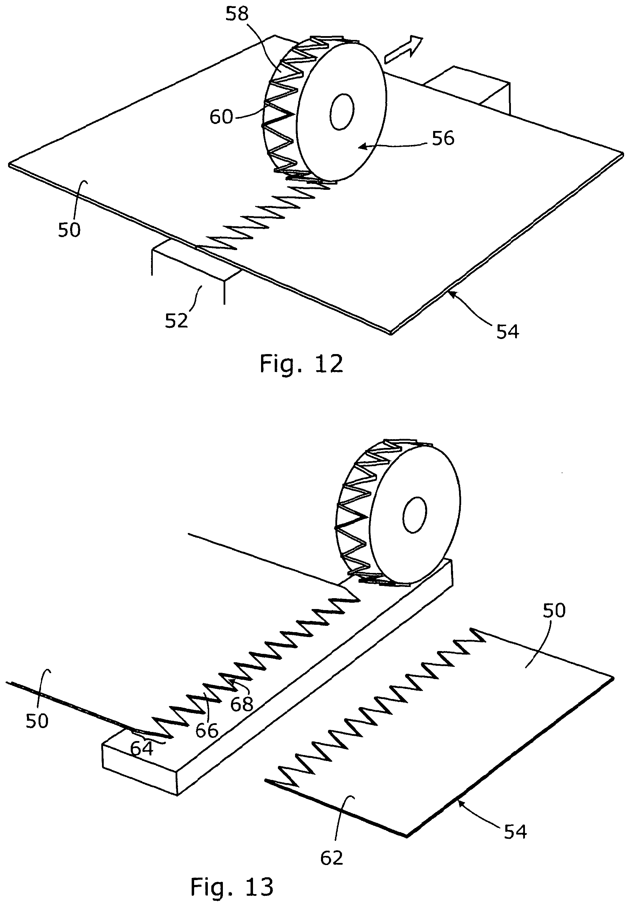

The examples described above relate to shaping the ends of strips of fibrous material in the context of automated fibre placement. However, the cutting and compaction techniques can be adapted for shaping the edges of wider sheets of fibrous material, e.g. for use in hand lay-up techniques, as described below with reference to Figures 12 to 15.

Fig. 12 shows a sheet 50 of prepreg material of indeterminate length, having a width of approximately one metre and a thickness of approximately 1.2 mm. The prepreg sheet 50 is laid over an elongate anvil 52. The anvil 52 extends is a direction parallel to a free edge 54 of the sheet 50, across the full width of the sheet 50.

A roller 56 having a cylindrical outer surface 58 is arranged above the anvil 52. The roller 56 is configured to roll across the full width of the prepreg sheet 50 on the anvil 52, i.e. parallel to the free edge 54 of the sheet 50, such that the roller 56 presses the prepreg sheet 50 against the anvil 52 as it rolls.

The roller 56 includes a continuous cutting edge 60 that extends in a zigzag manner around the cylindrical outer surface 58 of the roller 56. As the roller 56 is rolled across the prepreg sheet 50, it bears heavily against the sheet 50 on the anvil 52 so that the zigzag cutting edge 60 performs a zigzag cut through the sheet 50, parallel to the free edge 54 of the sheet 50.

Referring to Figure 13, once the roller 56 has cut through the sheet 50, a waste portion 62 of the sheet 50, which includes the free edge 54, is removed and discarded to reveal a new free end portion 64 of the prepreg sheet 50 on the anvil 52. The new free end portion 64 has a zigzag profile defined by the zigzag cut. It will of course be appreciated that the zigzag cut could be performed at any point along the length of the prepreg sheet 50 so that the portions of the sheet 50 on both sides of the cutting roller 56 are usable, thereby eliminating wastage.

When viewed in plan, the zigzag profile of the new free end portion 64 of the sheet 50 comprises a series of adjoined triangular projections 66 that taper towards the extremity of the new free end portion 64. When viewed in section, the triangular projections 66 are of substantially uniform thickness moving towards the extremity of the new free end portion 64. A series of inverted triangular spaces 68 are defined between the triangular projections 66.

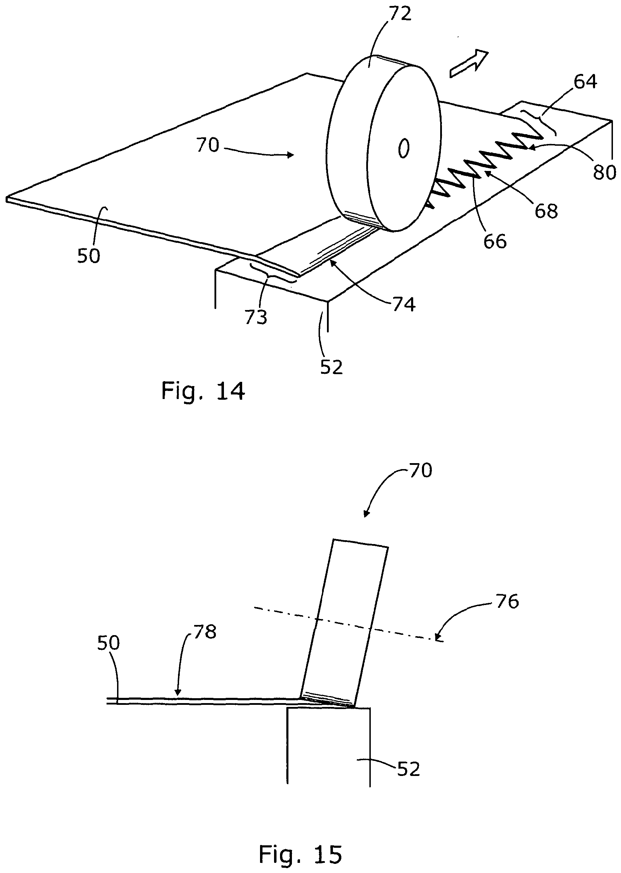

Referring now to Figure 14, once the new free end portion 64 of zigzag profile has been created, a compaction roller 70 having a smooth cylindrical outer surface 72 is provided above the anvil 52 and rolled along the new zigzag free end portion 64 of the prepreg sheet 50. The compaction roller 70 bears heavily against the sheet 50 on the anvil 52 to compact the new free end portion 64 as it rolls to create a compacted free end portion 73.

The purpose of cutting the zigzag profile is to allow the triangular projections 66 space to spread out laterally, i.e. in plan view, when compacted. Hence, as the new free end portion 64 is compacted by the roller 70, the triangular projections 66 spread laterally into the inverted triangular spaces 68 between projections 66 to create a substantially straight new free edge 74.

As shown in Figure 15, the roller 70 is tilted slightly so that its rotational axis 76 is inclined with respect to an upper surface 78 of the sheet 50. Tilting the roller 70 in this way increases the degree of compaction of the new free end portion 64 towards the tips 80 of the triangular projections 66 (Figure 14). This results in a compacted free end portion 73 that tapers towards the new free edge 74 of the sheet 50 when viewed in section.
It should be appreciated that cutting projections 66 that taper in plan view towards the extremity of the new free end portion 64 is advantageous because it results in corresponding spaces 68 between projections 66 that widen towards the extremity of the new free end portion 64. This allows the prepreg material more space to expand laterally when viewed in plan towards the new free edge 74, where compaction is greatest. In other embodiments of the invention, rather than tilting the compaction roller 70, a roller having a frustoconical surface may be used to produce the tapering compacted free end portion 73.
It will be appreciated that the techniques described above with reference to Figures 12-15 are also suitable for cutting strips of fibrous material.

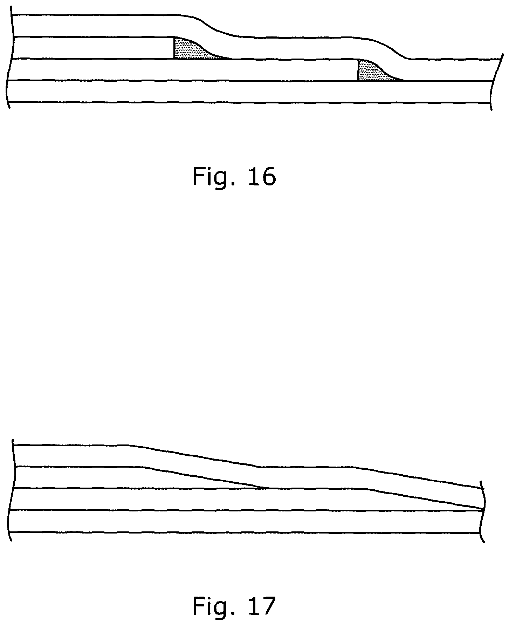

Fig. 16 shows a cross-section of a laminate produced without the methods described above. The abrupt section changes at tow or sheet ends lead to stress concentrations which can lead to de-lamination. Fig. 17 shows a cross-section of a laminate produced in accordance with the methods described above, and it can be seen that the abrupt section changes at the tow or sheet ends are removed, and therefore the risk of delamination is considerably reduced or removed.

## Claims

1. A method of tapering an edge of a fibrous reinforcement sheet (50) or strip (2) for a composite structure, the method comprising compacting an edge region (21, 64) of the sheet (50) or strip (2) to define a taper in cross-section, **characterized in that** the edge region (21, 64) having been shaped before compaction to define a series of projections (66) alternating with recesses (68) in plan view, wherein the projections (66), in plan view, spread when compacted to narrow the recesses (68) between the projections (66).

2. The method of Claim 1, wherein compaction is performed by squeezing the edge region (21, 64) between a roller (41, 72) and an anvil (42, 52).

3. The method of Claim 1, wherein compaction is performed by squeezing the edge region (21, 64) between a press member (31) and an anvil (32).

4. The method of any preceding claim, preceded by shaping the edge region (21, 64) of the sheet (50) or strip (2) to define the series of recesses (68) alternating with projections (66) in plan view.

5. The method of Claim 4, wherein shaping is performed by squeezing the edge region (21, 64) between a cutting roller (11, 56) and a cutting anvil (12, 52), the cutting roller (11, 56) and/or the cutting anvil (12, 52) having cutting formations (111, 60) to impart the shape of recesses (68) alternating with projections (66) to the edge region (21, 64).

6. The method of Claim 4, wherein shaping is performed by squeezing the edge region (21, 64) between a cutting press member (11, 56) and a cutting anvil (12, 52), the cutting press member (11, 56) and/or the cutting anvil (12, 52) having cutting formations (111, 60) to impart the shape of recesses (68) alternating with projections (66) to the edge region (21, 64).

7. The method of any preceding claim, wherein the projections (66) each taper in plan toward their extremity.

8. A method of making a composite structure, comprising:
tapering an edge (21, 64) of a fibrous sheet (50) or strip (2) in accordance with any preceding claim; and
incorporating the sheet (50) or strip (2) into a composite structure with the tapered edge (21, 64) lying against or beside at least one other fibrous reinforcement sheet (50) or strip (2).

9. Apparatus for tapering an edge (21, 64) of a fibrous reinforcement sheet (50) or strip (2) for a composite structure, the apparatus comprising:
a support (12, 42, 52) for supporting the sheet (50) or strip (2);
a compaction device (41, 72) for compacting an edge region (21, 64) of the sheet (50) or strip (2) to define a taper in cross-section, wherein the compaction device (41, 72) comprises a roller (41, 72) and an anvil (42, 52) arranged to squeeze the edge region (21, 64) between them; **characterized in that** the apparatus further comprises:
a shaping device (111, 60) arranged to shape the edge region (21, 64) of the sheet (50) or strip (2), before compaction, to define a series of recesses (68) alternating with projections (66) in plan view.

10. A composite structure such as a wind turbine blade, produced by the method of Claim 8 or by use of the apparatus of Claim 9.

## Patentansprüche

1. Verfahren zum Verjüngen einer Kante eines faserigen Verstärkungsblatts (50) oder -streifens (2) für eine Verbundstruktur, wobei das Verfahren Folgendes umfasst: das Verdichten eines Kantenbereichs (21, 64) des Blatts (50) oder Streifens (2), um eine Schräge im Querschnitt zu definieren, **dadurch gekennzeichnet, dass** der Kantenbereich (21, 64) vor dem Verdichten geformt wurde, um eine Reihe von Überständen (66) zu definieren, die sich in der Draufsicht mit Aussparungen (68) abwechseln, wobei sich die Überstände (66) in der Draufsicht verbreitern, wenn sie verdichtet werden, um die Aussparungen (68) zwischen den Überständen (66) zu verengen.

2. Verfahren nach Anspruch 1, wobei das Verdichten durch Pressen des Kantenbereichs (21, 64) zwischen einer Walze (41, 72) und einem Amboss (42, 52) erreicht wird.

3. Verfahren nach Anspruch 1, wobei das Verdichten durch Pressen des Kantenbereichs (21, 64) zwischen einem Pressenbauteil (31) und einem Amboss (32) erreicht wird.

4. Verfahren nach einem der vorstehenden Ansprüche, dem ein Formen des Kantenbereichs (21, 64) des Blatts (50) oder Streifens (2) vorausgeht, um die Reihe von Aussparungen (68) zu definieren, die sich in der Draufsicht mit Überständen (66) abwechseln.

5. Verfahren nach Anspruch 4, wobei das Formen durch Pressen des Kantenbereichs (21, 64) zwischen einer Schnittwalze (11, 56) und einem Schnittamboss (12, 52) durchgeführt wird, wobei die Schnittwalze (11, 56) und/oder der Schnittamboss (12, 52) eine schneidende Formgebung (111, 60) aufweisen, um dem Kantenbereich (21, 64) die Form von Aussparungen (68), die sich mit Überständen (66) abwechseln, zu verleihen.

6. Verfahren nach Anspruch 4, wobei das Formen durch Pressen des Kantenbereichs (21, 64) zwischen einem Schnittpressenbauteil (11, 56) und einem Schnittamboss (12, 52) durchgeführt wird, das Schnittpressenbauteil (11, 56) und/oder der Schnittamboss (12, 52) weisen Schnittformationen (111, 60), um dem Kantenbereich (21, 64) die Form von Aussparungen (68), die sich mit Überständen (66) abwechseln, zu verleihen.

7. Verfahren nach einem der vorstehenden Ansprüche, wobei sich die Überstände (66) jeweils in Richtung ihres äußeren Endes verjüngen.

8. Verfahren zum Herstellen einer Verbundstruktur, das Folgendes umfasst:
Verjüngen einer Kante (21, 64) eines faserigen Blatts (50) oder Streifens (2) nach einem der vorstehenden Ansprüche; und
Einarbeiten des Blatts (50) oder Streifens (2) in eine Verbundstruktur mit der verjüngten Kante (21, 64), die an oder neben mindestens einem faserverstärkten Blatt (50) oder Streifen (2) liegt.

9. Vorrichtung zum Verjüngen einer Kante (21, 64) eines faserverstärkten Blatts (50) oder Streifens (2) für eine Verbundstruktur, wobei die Vorrichtung Folgendes umfasst:
eine Halterung (12, 42, 52) zum Halten des Blatts (50) oder Streifens (2);
eine Verdichtungsvorrichtung (41, 72) zum Verdichten eines Kantenbereichs (21, 64) des Blatts (50) oder Streifens (2), um eine Verjüngung im Querschnitt zu definieren, wobei die Verdichtungsvorrichtung (41, 72) eine Walze (41, 72) und einen Amboss (42, 52) umfasst, die zum Pressen des Kantenbereichs (21, 64) zwischen ihnen angeordnet sind; **dadurch gekennzeichnet, dass** die Vorrichtung des Weiteren Folgendes umfasst:
eine Formgebungsvorrichtung (111, 60), die gestaltet ist, um den Kantenbereich (21, 64) des Blatts (50) oder Streifens (2) vor dem Verdichten zu formen, um eine Reihe von Aussparungen (68) zu definieren, die sich in der Draufsicht mit Überständen (66) abwechseln.

10. Eine Verbundstruktur, wie beispielsweise ein Windturbinenblatt, hergestellt nach dem Verfahren nach Anspruch 8 oder durch Nutzung der Vorrichtung nach Anspruch 9.

## Revendications

1. Procédé pour biseauter un bord d'une feuille (50) ou d'une bande (2) de renforcement fibreux pour une structure composite, le procédé comprenant la compression d'une région de bord (21, 64) de la feuille (50) ou de la bande (2) pour définir un biseau en coupe transversale, **caractérisé en ce que** la région de bord (21, 64) a été façonnée avant la compression pour définir une série de saillies (66) alternant avec des creux (68) dans une vue en plan, dans lequel les saillies (66), dans une vue en plan, s'étalent quand elles sont comprimées pour rétrécir les creux (68) entre les saillies (66).

2. Procédé selon la revendication 1, dans lequel la compression est réalisée en pressant la région de bord (21, 64) entre un cylindre (41, 72) et une enclume (42, 52).

3. Procédé selon la revendication 1, dans lequel la compression est réalisée en pressant la région de bord (21, 64) entre un élément de pression (31) et une enclume (32).

4. Procédé selon n'importe quelle revendication précédente, précédé par le façonnement de la région de bord (21, 64) de la feuille (50) ou de la bande (2) pour définir la série de creux (68) alternant avec des saillies (66) dans une vue en plan.

5. Procédé selon la revendication 4, dans lequel le façonnement est réalisé en pressant la région de bord (21, 64) entre un cylindre de coupe (11, 56) et une enclume de coupe (12, 52), le cylindre de coupe (11, 56) et/ou l'enclume de coupe (12, 52) ayant des formations de coupe (111, 60) pour donner la forme de creux (68) alternant avec des saillies (66) à la région de bord (21, 64).

6. Procédé selon la revendication 4, dans lequel le façonnement est réalisé en pressant la région de bord (21, 64) entre un élément de presse de coupe (11, 56) et une enclume de coupe (12, 52), l'élément de presse de coupe (11, 56) et/ou l'enclume de coupe (12, 52) ayant des formations de coupe (111, 60) pour donner la forme de creux (68) alternant avec des saillies (66) à la région de bord (21, 64).

7. Procédé selon n'importe quelle revendication précédente, dans lequel les saillies (66) sont chacune biseautées en plan vers leur extrémité.

8. Procédé pour fabriquer une structure composite, comprenant :
le biseautage d'un bord (21, 64) d'une feuille (50) ou d'une bande (2) fibreuse selon n'importe quelle revendication précédente ; et
l'incorporation de la feuille (50) ou de la bande (2) dans une structure composite avec le bord (21, 64) biseauté reposant contre ou à côté d'au moins une autre feuille (50) ou bande (2) de renforcement fibreux.

9. Appareil pour biseauter un bord (21, 64) d'une feuille (50) ou d'une bande (2) de renforcement fibreux pour une structure composite, l'appareil comprenant :
un support (12, 42, 52) pour supporter la feuille (50) ou la bande (2) ;
un dispositif de compression (41, 72) pour comprimer une région de bord (21, 64) de la feuille (50) ou de la bande (2) pour définir un biseau en coupe transversale, dans lequel le dispositif de compression (41, 72) comprend un cylindre (41, 72) et une enclume (42, 52) agencés pour presser la région de bord (21, 64) entre eux ; **caractérisé en ce que** l'appareil comprend en outre :
un dispositif de façonnement (111, 60) agencé pour façonner la région de bord (21, 64) de la feuille (50) ou de la bande (2), avant la compression, pour définir une série de creux (68) alternant avec des saillies (66) dans une vue en plan.

10. Structure composite telle qu'une pale d'éolienne, produite par le procédé selon la revendication 8 ou par l'utilisation de l'appareil selon la revendication 9.
